# EUROPEAN PATENT APPLICATION

(11) **EP 1 206 923 A1**
(43) Date of publication of application: **22.05.2002**
(21) Application number: 01106820.2
(22) Date of filing: 19.03.2001
(51) Int. Cl.: A61C 19/00, A61C 5/04

(54) **Dental device**

(30) Priority: 20.11.2000 US 716804
(71) Applicant: AdDent Inc., Danbury, CT 06810 (US)
(72) Inventor: Trushkowsky, Richard, Morganville New Jersey 07751 (US); Friedman, Joshua, Danbury CT. 06813 (US)
(74) Representative: Kinzebach, Werner, Dr.

(57) **Abstract**

A dental device for assisting in the filling and curing of a dental restoration when used with a light guide. The dental device includes an insert member and either a conical adapter or handling means adapted to accommodate a light guide. The insert member is tapered at one end thereof has an indicator means to monitor the depth of the restoration to the pulpal floor and to provide alignment of the preparation relative to the marginal ridge of the adjacent tooth. The conical adapter has an opening at the base to accommodate the light guide and an opening at the apex to accommodate the insert member. The handling means funtions in combination with the insert member to form an instrument into which a dental light guide can be mounted and has an elongated body of triangular shape with a first and second opening at the opposite ends of the elongated body adapted to receive insert member(s) which are interchangeable for facilitating mesial and distal contact with an adjacent tooth.

## Description

### FIELD OF INVENTION

This invention relates to a dental device for use with a light guide in the filling and curing of a dental restoration. The dental device comprises an insert member which may be combined with handling means to form a dental instrument which accommodates a light guide or combined with an adaptor for directly coupling the insert member to the light guide.

### BACKGROUND OF THE INVENTION

Recent advances in dentin bonding and the increased importance of esthetics in dental restorative preparations have accelerated the use of light activated resin composite materials as filling materials for both anterior and posterior restorations. However, despite improvements in materials and techniques, the placement of the resin composite remains technique sensitive and establishing firm and properly located proximal contact using resin composite filling materials particularly for posterior restorations remains difficult to achieve. If adequate contact is not achieved after matrix removal, a space will occur with the adjacent tooth. Food impaction may result in decay formation and periodontal disease. The plasticity of resin composite materials prior to the application of light radiation for curing the material makes it difficult to contour the restoration and to establish contact with adjacent teeth. In addition, it is, at present, difficult to cure composite in the deeper recesses of a dental preparation. Moreover, currently available dental devices do not make accurate contact mesially and distally to provide for adequate approximal contact during hardening and are unable to accommodate different size preparations. Commercially available devices are also unable to gauge or monitor the depth of the restoration or to assist in aligning the preparation with an adjacent tooth. For proper curing of the resin composite light must to able pass from the light curing source into the gingival floor area through the proximal box. Otherwise open margins, sensitivity and recurrent decay will develop. Accordingly, the dental device should facilitate the transmission of light into the gingival floor areas.

The device of the subject application is an insert member for use with an adaptor to couple the insert member directly to a dental light guide routinely used to cure dental composite restorations. Alternatively, the insert member can be attached to a separate handle to form an instrument to be held in the hand of a dentist for use in conjuntion with a light guide. US Patent number 4,666,405 describes a device to position a dental light guide to cure dental composite restorations but its design does not employ the insert member of the device of the present invention and does not provide the ideal anatomical shape for posterior teeth nor does it provide a marginal ridge guide or an indicator to monitor the depth of the restoration to as described in this invention.

### SUMMARY OF THE INVENTION

The dental device of the present invention enables light to pass deep into the proximal box and contemplates the use of a removable and interchangeable insert member to readily facilitate the use of the device both mesially and distally. It is adaptable for use with any size restoration by substituting different size insert members. Moreover, the insert members are disposable. Each insert member includes an indicator to monitor the depth of the restoration to the pulpal floor and to assist in alignment of the restorative preparation to the marginal ridge of an adjacent tooth.

More specifically, the dental device of the present invention comprises: an insert member for establishing proximal contact with the light activated restorative material(s) in a dental preparation characterized in that the insert member includes a substantially cylindrical upper end section and a lower end section with the lower end section shaped for establishing a substantially concentric relationship with light activated restorative material in the dental preparation. The lower end section of the insert member should have a tapered portion for condensing restorative filling material and should have another portion shaped to provide a concave surface on one side thereof and a convex surface on the opposite side thereof. The tapered portion should extend downwardly to form a tip which is flat ended in cross section and of approximately rectangular geometry. The lower end section of the insert member may further include indicator means to monitor the depth of the restoration to the pulpal floor and to provide alignment of the preparation relative to the height of the marginal ridge of an adjacent tooth. In addition, the insert member should be disposable and is intended to be used to facilitate mesial or distal contact with the adjacent tooth to the tooth being restored.

The insert member may be combined with an adaptor to accommodate a light guide in the filling and curing of a dental restoration using light activated resin composite material(s). The adaptor should preferably include a conical base section at one end thereof of a diameter sufficient to accommodate the light guide and an apex at the opposite end thereof having an opening of a diameter sufficient to receive said insert member.

The insert member may alternatively be combined with handling means for forming a dental instrument to accommodate a light guide in the filling and curing of a dental restoration using light activated resin composite material(s). The handling means should include an elongated body of triangular shape, a first opening at one end thereof adapted to receive a first removable and disposable insert member and a second opening at the end of the elongated body opposite said first opening to receive a second removable and disposable insert member, said first and second insert member being interchangeable with one another for facilitating mesial and distal contact of the insert member(s) with the filled preparation and having a notch adjacent the location of each opening, said notch having a geometry forming a rest stop for the placement of a light guide against either insert member to establish a substantially concentric relationship between the light guide and insert member. Each insert member has a shaped body tapered at one end thereof and indicator means to monitor the depth of the restoration to the pulpal floor and to provide alignment of the preparation relative to the height of the marginal ridge of an adjacent tooth.

### BRIEF DESCRIPTION OF THE DRAWINGS

Other objects and advantages of the present invention will become apparent from the following detailed description of the present invention when read in conjunction with the accompanying drawings of which:
Figures 1(a), 1(b) and 1(c) show the insert member of the device of the present invention with different adapter configurations for insertion into a dental light guide;
Figures 2(a), 2(b) and 2(c) are perspective views of the insert member as shown in Figure 1 with different textures in its lower end section;
Figure 3(a) is a front view of the insert member in the dental device of the present invention;
Figure 3(b) is a side view of the insert member in the dental device of the present invention 1;
Figure 4 is an end view of the insert member 1;
Figure 5 is a front elevation of a handle for use in combination with the device of the present invention for forming a dental instrument;
Figure 6 is an enlargement of one end of the handle of Figure 5; and
Figure 7 is a diagrammatic view in perspective of a cut-away section of the handle of Figure 5 showing an insert member mounted in the handle at one end thereof and a phantom section of a conventional light guide shown mounted in juxtaposition against the insert member.

### DETAILED DESCRIPTION OF A PREFERRED EMBODIMENT

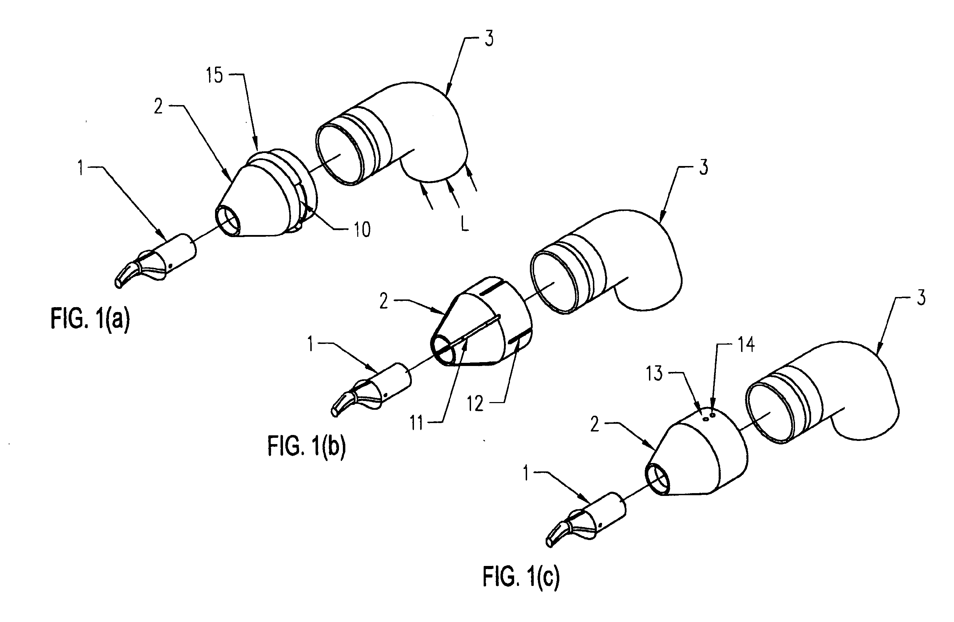

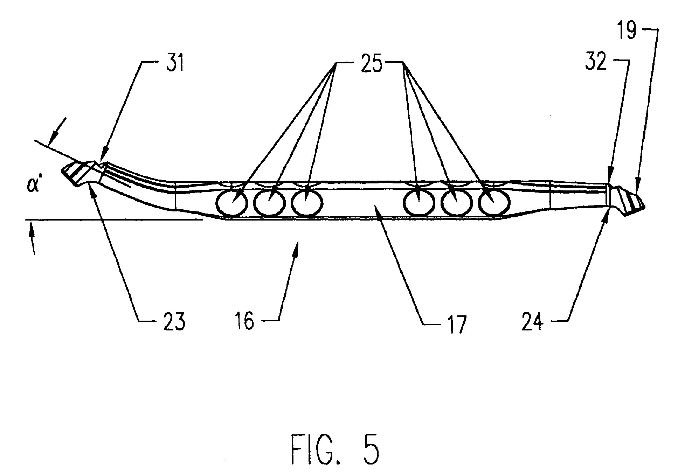

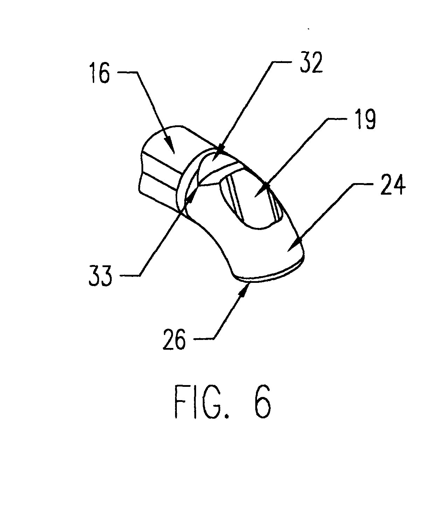

The dental device of the present invention comprises an insert member 1 adapted in one embodiment to be used with a conical adapter 2 in which it may be removably mounted for direct attachment to a light guide 3 as shown in Figures 1(a)-(c) or alternatively in another embodiment to be to be used with handling means forming an instrument having a handle 20 and openings 19 into which one or two insert member(s) may be inserted as shown in Figures 5-7 respectively.

The adapter 2 as shown in Figure 1 is conical in shape. The insert member 1 is inserted through an opening at the apex of the adapter 2 and a light guide 3 is mounted adjaent its base. The insert member 1 establishes mesial and/or distal contact with adjacent teeth.

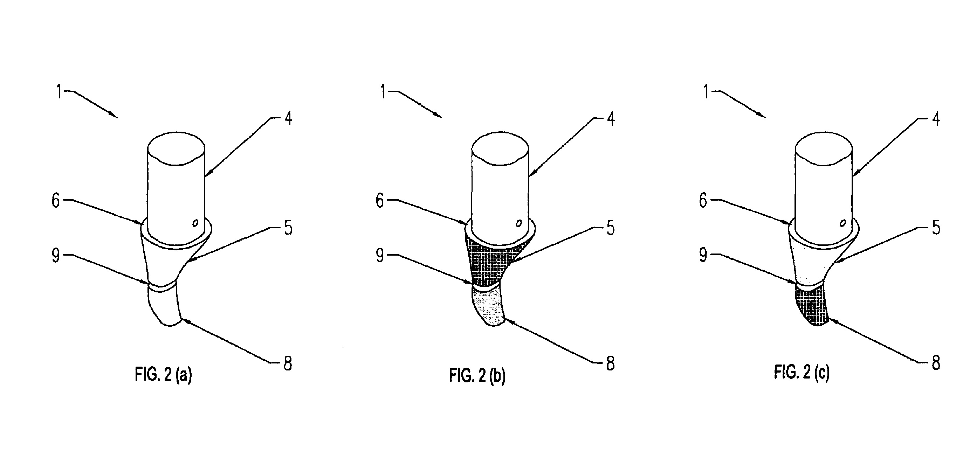

Each insert member 1 is preferably of a transparent plastic composition having a redetermined optical transmissivity. However, insert(s) 1 may be composed of materials of different optical transmissivities to control the speed and degree of polymerization of the dental filling material in the restoration. Since it is known in the literature that high initial curing energy can cause material shrinkage, the transmissivity characteristic of the insert can thus be used to control material shrinkage and strain in the restoration. The insert member(s) as more dearly shown in Figure 2, 3 and 4 have an upper end section 4 so that they may be interchangeably mounted in the opening apex of the adapter. Moreover, the upper end section 4 of each insert member 1 is sized and shaped commensurate with the size and shape of the opening apex of the conical adapter to establish a friction fit in each of the openings when slidably inserted but which permits each insert member 1 to be removed therefrom. The insert member 1 also has a lower end section 5 which may be similar in shape to one another. However, the insert members 1 may be of different length and width so as to fit into an existing preparation and may have different shapes to accommodate pre-molar, molar and deciduous teeth.

Figure 1(a) shows a conical adaptor 2 which has two or more slits 10 in its side. The slits allow an elastomeric "○" ring 9 to be captured in two or more places so that a portion of he "○" ring 9 projects slightly inside the clinical adaptor 2. This arrangement provides for a gripping action by the "○" ring 9 so that the adaptor 2 is held in place on a light guide 3, and can still be removed as required. Figure 1(b) shows a conical adaptor 2 which has two or more slits 11 and 12 positioned around its circumference. These slits allow the metal of adaptor 2 to deform so that it can removeably hold insert 1 at its apex and a light guide 3 at its opposite end. Figure 1(c) shows a conical adaptor 2 which has two or more dimples 13 and 14 on its circumference. One dimple 13 is used to hold adaptor 2 in position. The other dimple 14 provides for anti-rotation of conical adaptor 2.

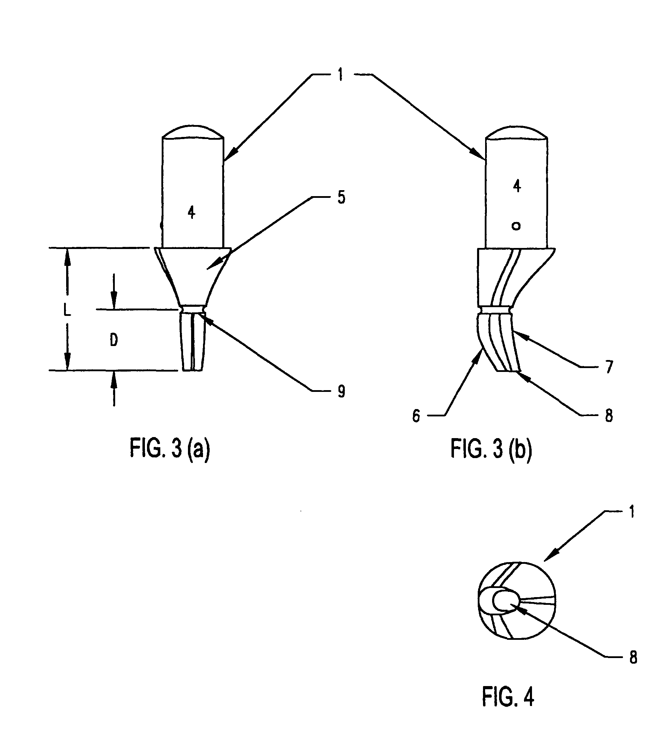

The upper end section 4 of each insert member 1 and the geometry of the opening in the conical adapters is preferably cylindrical although other geometries such as a square geometry may be used. A somewhat cylindrical geometry permits the insert member 1 to be rotated in the opening of the conical adapter to accommodate mesial or distal contact and remain in a fixed position. The diameter of the cylindrical upper section 4 should be slightly smaller than the diameter of the lower section 5 at the junction adjoining the two sections 4 and 5 respectively so as to form a ledge 6 which will abut the distal end of each of the end sections upon mounting the insert member 4 into the adapter 3, shown on Figure 1. The lower end section 5 of each insert member 1 is shaped to form a convex surface 6 on one side thereof and a concave surface 7 on the opposite side thereof as shown in Figure 3(b). The lower end section 5 of each insert member 1 also tapers downwardly from the ledge 6 with the convex and concave surfaces 6 and 7 gradually decreasing in diameter to converge into a flat ended tip 8 of substantially rectangular configuration at the distal end thereof as shown in Figure 4. The flat ended tip 8 is sized to provide access into a prepared tooth for condensing the filling material and permits light curing at the gingival terminus. The lower end section 5 of each insert member 1 has a marking 9, preferably represented by a circumferential groove, which is substantially horizontal and parallel to the flat ended tip 8 at a predetermined height "D" relative to the length "L" of the lower end section 5 of insert 1. The marking or groove 9 functions as a visual indicator for monitoring the depth of the restoration to the pulpal floor and used to assist in the alignment of the restoration both in height and position with the marginal ridge of an adjacent tooth. Height "D" will vary between 2mm and 6mm depending on the depth of the preparation. Accordingly, the marking 9 can be represented by any form of molded visual indicator including a printed marking. The greatest height of curvature is approximately 1mm below the groove. The outer periphery of the lower end section 5 may be textured to provide the function of a mechanical lock for subsequently placed composite material. A textured surface on lower section 5 can also be used to disperse light circumferentially or selectively throughout the depth of the restoration.

The dental insert 1 may alternatively be used in combination with handling means 16 to form a manual dental instrument having an elongated body 17 as shown in Figure 5 to be held in the hand of a dentist when filling and curing a dental restoration using a light guide 3. An insert member 1 can be inserted into the opening 19 at each opposite end of the elongated body 17.

The elongated body 17 is an axial body of preferably triangular shape, with two end sections 23 and 24 located at each opposite end thereof. The triangular shaped body 17 contains a plurality of concave areas 25 which provide recesses along the length of the body 17 to enable the body 17 to be easily held in one hand in a fixed position and to permit increased torquing efficiency. The axial body 17 is bent at the end thereof adjacent the end section 23 to form an inclined angle "α" of between 10 and 25 degrees, preferably 15°, relative to the longitudinal axis of the body 17. Likewise, although not shown, the body 17 may be bent adjacent the opposite end section 24 but to a more limited extent of preferably no more than about 5° relative to the longitudinal axis.

Each opposite end 23 and 24 of the axial body 17 has an opening 19 extending therethrough into which an insert member 1 is interchangeably mounted. The opening 19 is oriented relative to the axial body 17 to permit mounting two insert members 1 into the body 17 so that each insert member 1 can establish mesial and/or distal contact with adjacent teeth.

The upper end section 4 of each insert member 1 and the geometry of the opening 19 is preferably cylindrical although other geometries such as a square geometry may be used. A cylindrical geometry permits the insert member 1 to be rotated in the opening 19 to accommodate mesial or distal contact. The diameter of the cylindrical upper section 4 should be slightly smaller than the diameter of the lower section 5 at the junction adjoining the two sections 4 and 5 so as to form a ledge 6 which will abut the distal end of each of the end sections 23 and 24 in the axial body 17 upon mounting an insert member 1 therein. The lower end section 5 of each insert member 1 is shaped to form a convex surface 6 on one side thereof and a concave surface 7 on the opposite side thereof as shown in Figure 3. The lower end section 5 of each insert member 1 also tapers downwardly from the ledge 6 with the convex and concave surfaces 6 and 7 gradually decreasing in diameter to converge into a flat ended tip 8 of substantially rectangular configuration sized to provide access into a prepared tooth for condensing the filling material and permits light curing at the gingival terminus. The lower end section 5 of the insert member 1 has a marking 9, preferably represented by a groove, which is substantially horizontal and parallel to the flat ended tip 8. The marking or groove 9 functions as a visual indicator for monitoring the depth of the restoration to the pulpal floor and to assist in the alignment of the restoration both in height and position with the marginal ridge of an adjacent tooth. Height "D" will vary between 2mm and 6mm depending on the depth of the preparation. Accordingly, the marking 9 can be represented by any form of visual indicator including a printed marking. The greatest height of curvature is approximately 1mm below the groove.

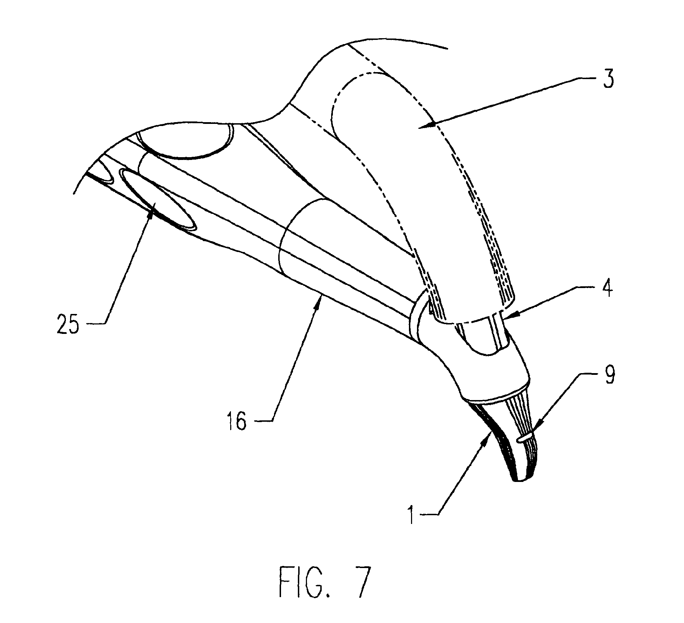

A notch 31 and 32 is formed in the end sections 23 and 24 of the body 17 adjacent the openings 19. Each of the notches 31 and 32 has a "V" shaped configuration in cross section forming an apex 33. The notches 31 and 32 function as a rest stop for the placement of a conventional optical light guide 3 as shown in phantom in Figure 7 against the upper section 4 of either one of the insert member(s) 1. The light guide 3 is held on place in the notch 31 or 32 of an insert member 1 to maintain the light guide 3 in substantial coaxial relationship with the upper end section 4 of the insert member 1 when curing the filling.

## Claims

1. A dental device for assisting in the filling and curing of a dental restoration with light activated restorative material(s) comprising: an insert member for establishing proximal contact with light activated restorative material(s) in a dental preparation **characterized in that** the insert member has a substantially cylindrical upper end section and a lower end section with the lower end section establishing a substantially concentric relationship with the light activated restorative material in the dental preparation.

2. A dental device as claimed in claim 2 wherein the lower end section of said insert member includes a downwardly tapered end forming a substantially flat ended tip for condensing filler material.

3. A dental device as daimed in claim 3 wherein said tip has a rectangular shape in cross section.

4. A dental device as claimed in any of the preceding claims wherein the lower end section of said insert member above said downwardly tapered end is shaped to form a concave surface on one side thereof and a convex surface on the opposite side thereof.

5. A dental device as claimed in claim 4 wherein said insert member further includes indicator means to monitor the depth of the restoration to the pulpal floor and to provide alignment of the preparation relative to the marginal ridge of an adjacent tooth.

6. A dental device as claimed in any of the preceding claims further comprising an adapter means for coupling the insert member to a dental light guide **characterized in that** said adapter means has a conical base section at one end thereof of a diameter suffcient to accommodate the light guide and an apex at the opposite end thereof having an opening of a diameter suffcient to receive said insert member.

7. A dental device as claimed in claim 6 wherein the upper end section of the insert member is of a diameter substantially equal to the diameter of the opening in the apex of said adapter.

8. A dental device as defined in claim 7 wherein the diameter of the upper end section is smaller than the circumference of the lower end section for forming an annular ledge.

9. A dental device as defined in claim 5 wherein said indicator means comprises a horizontal groove lying substantially parallel to the flat ended tip.

10. A dental device as claimed in any of the preceding claims wherein the insert member has a textured surface to disperse light circumferentially or selectively throughout the depth of the restoration.

11. A dental device as claimed in any of the claims 1-5 further comprising handling means which in combination with the insert member forms an instrument into which a dental light guide can be mounted **characterized in that** said handling means has an elongated body of triangular shape with a first opening at one end thereof adapted to receive a first insert member and a second opening at the opposite end of the elongated body adapted to receive a second insert member, said first and second insert member(s) being interchangeable with one another for facilitating mesial and distal contact with an adjacent tooth.

12. A dental device as claimed in claim 11 wherein the elongated body of said handling means further includes a notch at a location adjacent each opening on opposite ends of the device with said notch having a geometry for forming a rest stop for a light guide oriented to establish a concentric relationship between the light guide and the insert member when curing light activated restorative material in the filling.

13. A dental device as defined in claim 12 wherein said elongated body is axial and has a first and second end section at its opposite ends with said first end section lying at an inclined angle "α" of between 10 and 25 degrees relative to the longitudinal axis of said body and wherein said second end section lies at an angle of from zero degrees to 5 degrees relative to the longitudinal axis of said body.

14. A dental device as defined in claim 13 wherein the elongated body further includes a plurality of depressions which facilitates the placement of the users finger(s) for holding the body.

15. A dental device as defined in claim 14 wherein said first and second opening is of a geometry conforming to the geometry of the upper end of said insert member.

16. A dental device as defined in claim 15 wherein each insert member includes indicator means to monitor the depth of the restoration to the pulpal floor and to provide alignment of the preparation relative to the marginal ridge of an adjacent tooth.

17. A dental device as defined in claim 16 wherein said indicator means comprises a horizontal groove lying substantially parallel to the flat ended tip.
